# EUROPÄISCHE PATENTSCHRIFT

(11) **EP 0 945 113 B1**
(45) Veröffentlichungstag und Bekanntmachung des Hinweises auf die Patenterteilung: **21.12.2005**
(21) Anmeldenummer: 99104163.3
(22) Anmeldetag: 02.03.1999
(51) Int. Cl.: A61G 5/04

(54) **Hilfsantriebsvorrichtung für Selbstfahrer-Rollstühle**
Auxiliary propelling device for wheelchair propelled by the patient
Dispositif de propulsion auxiliaire pour fauteuil roulant propulsé par le patient

(30) Priorität: 21.03.1998 DE 19812563; 15.12.1998 DE 19857786
(43) Veröffentlichungstag der Anmeldung: 29.09.1999
(73) Patentinhaber: Ulrich Alber GmbH, 72461 Albstadt-Tailfingen (DE)
(72) Erfinder: Alber, Ulrich, 72459 Albstadt (DE)
(74) Vertreter: Staudt, Hans-Peter

(56) Entgegenhaltungen:
- EP-A- 0 756 856
- EP-A- 0 776 647
- EP-A- 0 861 648
- WO-A-95/05141
- WO-A-97/05010
- US-A- 3 908 776
- US-A- 5 427 193

## Beschreibung

Die Erfindung betrifft eine Hilfsantriebsvorrichtung für einen ein Rollstuhlgestell aufweisenden Selbstfahrer-Rollstuhl.

Aus der WO 97/05010 A ist eine Hilfsantriebsvorrichtung bekannt, bei der die Antriebseinheit mit der Wicklung des Elektromotors, der Stromversorgung und der Elektronik feststehend an einem Stator-Gehäuseabschnitt angeordnet ist. Dies hat zur Folge, dass diese Elemente sich beim Betrieb des Rollstuhls nicht mit den Laufrädern mitdrehen. Ein Handlauf, über den ein Rollstuhlfahrer das Laufrad antreiben kann, sowie eine Sensoreinrichtung, mittels derer die in einen Rotor eingeleitete Kraft gemessen werden kann, sind Bestandteile einer beim Betrieb des Rollstuhls rotierenden Baugruppe. Die Signalübertragung zwischen der Sensoreinrichtung, die mit dem Handlauf und den Laufrädern mitrotiert, und der stehenden, d.h. nicht mitrotierenden Elektronik erfordert einen komplizierten technischen Aufwand, erhöhtes Gewicht und hohe Herstellungskosten.

Die US 5,427,193 offenbart eine Antriebsvorrichtung für einen Rollstuhl, bei der ein Antriebsmotor auf einer Platte angeordnet ist und über ein Planetengetriebe eine Drehung des Rades bewirkt, so dass sich beim Drehen des Rades alle Komponenten des Elektromotors gegenüber dem Rollstuhlgestell drehen.

Der Erfindung liegt die Aufgabe zugrunde, eine der WO 97/05010 A entsprechende Hilfsantriebsvorrichtung derart auszuführen, dass deren Nachteile vermieden werden.

Die Lösung dieser Aufgabe ist im Patentanspruch 1 angegeben.

Die erfindungsgemäße Hilfsantriebsvorrichtung hat den Vorteil, dass ebenfalls mitrotierende Sensoren über feste Kabel- oder Drahtverbindungen mit der Antriebseinheit gekoppelt werden können.

Die Antriebseinheit weist eine Ansteuerelektronik, und vorzugsweise eine Einstellmöglichkeit des Unterstützungsgrades und eine Einstellmöglichkeit des selbständigen Nachlaufs der Hilfsantriebsvorrichtung auf, damit der therapeutische Wert des Selbstfahrer-Rollstuhls zur Entwicklung der Arm- und Schultermuskulatur erhalten bleibt, überlastungen der Armmuskeln und -gelenke jedoch vermieden werden. Die Antriebseinheit weist außerdem eine Drehmomentabstützung zum Rollstuhlgestell auf. Für den Antrieb können Elektromotoren mit oder ohne Übersetzungsgetriebe eingesetzt werden. Weitere Vorteile ergeben sich, wenn der Greifring an gleichmäßig über seinen Umfang verteilten Stützen außerhalb der Radnabe am Laufrad gelagert ist. Hierdurch ist der Radnabenbereich vollständig frei zur Aufnahme der Antriebseinheiten der Vorrichtung. Dadurch ist es auch möglich, die Antriebseinheiten ohne Überstand im Radnabenbereich der Laufräder zu integrieren. Vorzugsweise können die Stützen elastisch federnd gelagert sein, wodurch erreicht werden kann, daß die Drehbewegung des Greifrings durch die am Greifring eingeleitete Kraft sich so verhält, als wäre der Greifring konzentrisch zum Laufrad gelagert. Im Bereich mindestens einer der Stützen kann ein Druck- oder Kraftsensor angeordnet sein, der die in den Greifring eingeleitete Kraft misst und ein entsprechendes Messsignal direkt an die Elektronik in der Antriebseinheit weiterleitet. Je nach Einstellung des Unterstützungsgrades wird aus diesem Messsignal eine entsprechende Ansteuerung der Elektromotoren bewirkt. Auch ein Abbremsen des Rollstuhls bei Bergabfahrten ist mit der Hilfsantriebsvorrichtung möglich. Wird auf die Greifringe bremsend eingewirkt, so schalten die Elektromotoren ihre Laufrichtung um. Weitere Vorteile ergeben sich, wenn die Laufräder mittels einer Schnellwechsel-Steckachse am Rollstuhlgestell befestigbar sind. Dadurch kann ein Rollstuhl nicht nur auf einfache Weise mit der Antriebsvorrichtung nachgerüstet, sondern auch rasch und problemlos im Kofferraum eines Fahrzeugs transportiert werden. Hierzu werden die Laufräder vom Rollstuhlgestell über die Schnellwechsel-Steckachse abgenommen und das Rollstuhlgestell gefaltet. Die Montage nach dem Transport ist in ebenso problemloser Weise möglich. Dabei ist es von Vorteil, wenn die Laufräder identisch ausgebildet sind. Es muss dann nicht darauf geachtet werden, welches Rad auf der linken und welches Rad auf der rechten Seite des Rollstuhlgestells montiert werden muss. Vorzugsweise können die Laufräder mit Sicherheitsschaltern versehen sein, die die Antriebseinheiten bei Abnahme der Laufräder vom Rollstuhlgestell abschalten. Ein unbeabsichtigtes Einschalten der Antriebsvorrichtungen bei fehlerhaft montierten oder vollständig abgenommenen Laufrädern beispielsweise während des Transports des Rollstuhls ist damit ausgeschlossen. Nachfolgend wird ein bevorzugtes Ausführungsbeispiel einer erfindungsgemäßen Hilfsantriebsvorrichtung anhand der Zeichnung näher beschrieben.

Es zeigen:
- Fig. 1: eine Draufsicht auf ein Laufrad einer Hilfsantriebsvorrichtung;
- Fig. 2: einen Schnitt entlang der Linie II - II durch das Laufrad aus Fig. 1;
- Fig. 3: eine vergrößerte Detailansicht der Greifringlagerung des Laufrades aus Fig. 2.

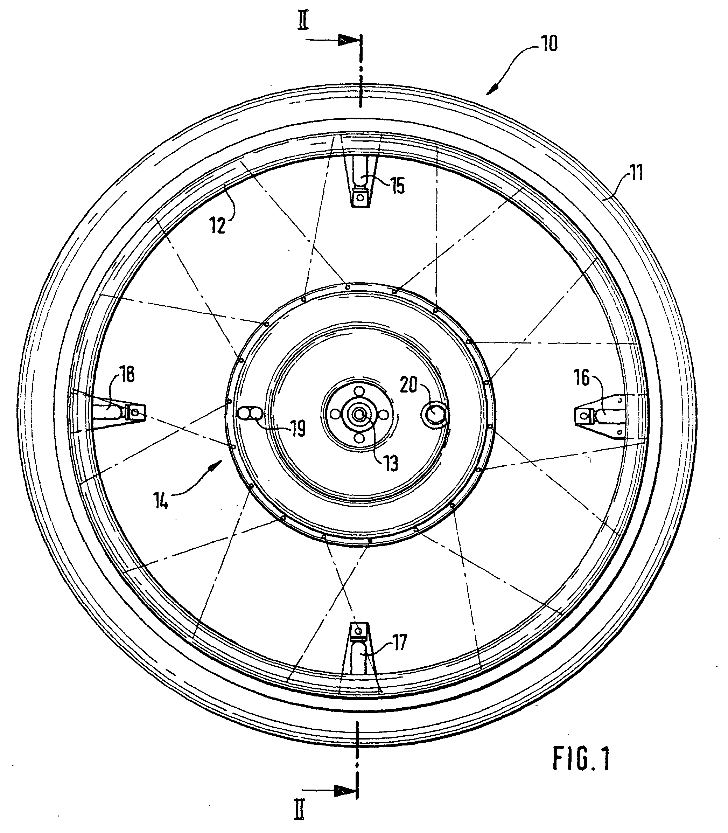

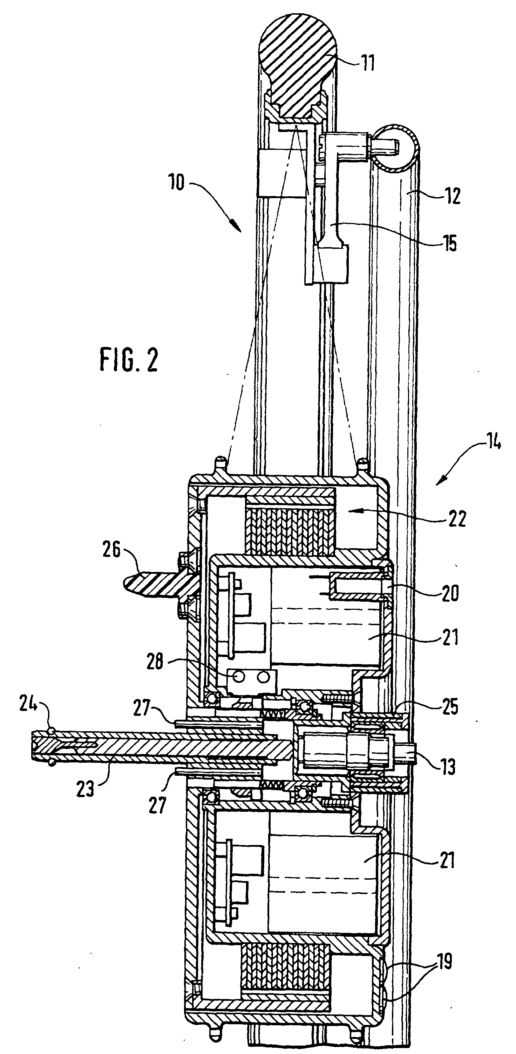

Fig. 1 zeigt ein Laufrad 10 mit einem Reifen 11 sowie einem Greifring 12 zum manuellen Antrieb. Im Bereich der Radnabe ist eine Antriebseinheit 14 gelagert. Der Greifring 12 ist nicht an der Radnabe, sondern an vier über seinen Umfang verteilten Stützen 15, 16, 17, 18 am Laufrad 10 gelagert. In der Mitte der Antriebseinheit 14 ist ein Hauptschalter 13 zum Ein- und Ausschalten der Antriebseinheit 14 vorgesehen. Außerdem weist die Antriebseinheit 14 Folientaster 19 zur Einstellung des selbstständigen Nachlaufs auf. An der gegenüberliegenden Seite der Antriebseinheit 14 ist eine Ladesteckdose 20 zur Aufladung eines Akkus 21 (Fig. 2) als Stromversorgung der Antriebseinheit 14 vorgesehen.

Der innere Aufbau der Antriebseinheit 14 ist aus Fig. 2 ersichtlich. Ein Elektromotor 22 bildet den radial äußeren Teil der Antriebseinheit 14. Innerhalb davon sind Akkus 21 angeordnet. Das gesamte Laufrad 10 ist mittels einer Schnellwechsel-Steckachse 23 an einem nicht näher dargestellten Rollstuhlgestell befestigbar. Am Ende der Steckachse 23 sind Sperrkugeln 24 vorgesehen, die eine Hülse am Rollstuhlgestell hintergreifen und so das Laufrad 10 am Gestell festhalten. Zur Entriegelung der Steckachse 23 ist auf der Außenseite des Rades 10 ein Drehgriff 25 vorgesehen, mit dessen Hilfe die Kugeln 24 ins Innere der Steckachse 23 gedrückt werden können. Auf der Innenseite des Laufrades 10 ist außerdem eine Drehmomentabstützung 26 angeordnet. Im Bereich der Steckachse 23 sind Bedienstifte 27 für einen Sicherheitsschalter 28 vorgesehen, der dafür sorgt, dass die Antriebseinheit 14 nur bei korrekt montiertem Laufrad 10 einschaltbar ist.

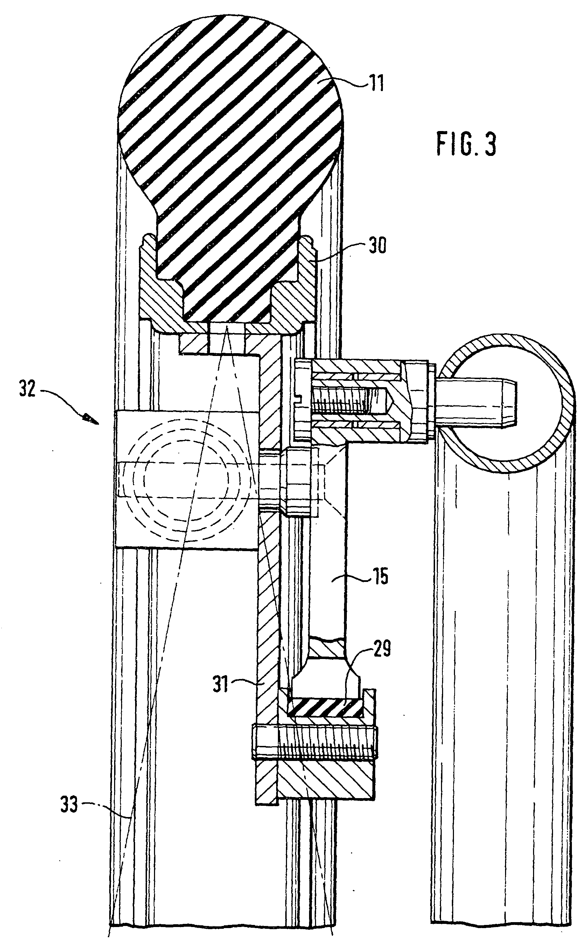

Die Lagerung des Greifrings 12 am Laufrad 10 verdeutlicht Fig. 3. Der Greifring 12 ist an einer Stütze 15 befestigt. Die Stütze 15 wiederum ist über ein Gummielement 29 elastisch an einem mit einer Felge 30 des Laufrades 10 verbundenen Befestigungsblech 31 angeordnet. Diese federnd elastische Lagerung des Greifrings 12 ermöglicht bei einer Krafteinleitung am Greifring 12 eine Drehbewegung des Greifrings 12 in analoger Weise, als wäre der Greifring 12 konzentrisch zum Reifen 12 in der Radnabe gelagert. An der Stütze 15 ist außerdem ein Druck-oder Kraftsensor 32 angeordnet, der die auf den Greifring 12 ausgeübte Kraft misst und ein entsprechendes Messsignal entlang einer der Speichen 33 des Laufrades 10 zur Steuerung des mitrotierenden Motors 22 weiterleitet. In Abhängigkeit von der am Greifring eingeleiteten Kraft 12 sowie des über die Taster 19 eingestellten Unterstützungsgrades wird die Leistungselektronik des Motors 22 entsprechend angetrieben. Über den Drucksensor 32 ist auch die Richtung der Krafteinleitung feststellbar. Dementsprechend unterstützt der Elektromotor 22 entweder die Vorwärtsbewegung des Rades 10 oder bremst diese ab.

## Patentansprüche

1. Hilfsantriebsvorrichtung für einen ein Rollstuhlgestell aufweisenden Selbstfahrer-Rollstuhl, wobei die Hilfsantriebsvorrichtung die folgenden Merkmale aufweist:
zwei lösbar an einem Rollstuhlgestell befestigbare und mit Greifringen (12) versehene Laufräder (10), die jeweils eine Radnabe sowie eine Antriebseinheit (14) mit einem Elektromotor (22) und zugehöriger Stromversorgung (21) und Elektronik aufweisen,
wobei die Antriebseinheit (14) vollständig im Bereich der Radnaben angeordnet, ist
ein stationärer Teil des Elektromotors (22) mittels einer Drehmomentabstützung (26) stationär an dem Rollstuhlgestell eines Selbstfahrer-Rollstuhls abstützbar ist und **dadurch gekennzeichnet, daß**
die Antriebseinheit mit der Wicklung des Elektromotors, der Stromversorgung (21) und der Elektronik derart mit einem Teil der Radnabe verbunden ist, dass sie sich mit dem Laufrad (10) mitdreht.

2. Hilfsantriebsvorrichtung nach Anspruch 1, **dadurch gekennzeichnet, dass** die Antriebseinheit (14) eine Ansteuerelektronik, eine Einstellmöglichkeit des Unterstützungsgrades und eine Einstellmöglichkeit (19) des selbstständigen Nachlaufs der Hilfsantriebsvorrichtung aufweist.

3. Hilfsantriebsvorrichtung nach einem der Ansprüche 1 bis 2, **dadurch gekennzeichnet, dass** die Antriebseinheit (14) einen Elektromotor (22) mit oder ohne Übersetzungsgetriebe aufweist.

4. Hilfsantriebsvorrichtung nach einem der Ansprüche 1 bis 3, **dadurch gekennzeichnet, dass** der Greifring (12) an gleichmäßig über seinen Umfang verteilten Stützen (15, 16, 17, 18) außerhalb der Radnabe am Laufrad (10) gelagert ist.

5. Hilfsantriebsvorrichtung nach Anspruch 4, **dadurch gekennzeichnet, dass** die Stützen (15, 16, 17, 18) federnd elastisch gelagert sind.

6. Hilfsantriebsvorrichtung nach Anspruch 4 oder 5, **dadurch gekennzeichnet, dass** im Bereich mindestens einer der Stützen (15, 16, 17, 18) ein Druck- oder Kraftsensor (32) angeordnet ist, der die in den Greifring (12) eingeleitete Kraft misst und ein entsprechendes Messsignal direkt an die Elektronik weiterleitet.

7. Hilfsantriebsvorrichtung nach einem der Ansprüche 1 bis 6, **dadurch gekennzeichnet, dass** die Laufräder (12) mittels einer Schnellwechsel-Steckachse (23) am Rollstuhlgestell befestigbar sind.

8. Hilfsantriebsvorrichtung nach einem der Ansprüche 1 bis 7, **dadurch gekennzeichnet, dass** die Laufräder (10) identisch ausgebildet sind.

9. Hilfsantriebsvorrichtung nach einem der Ansprüche 1 bis 8, **dadurch gekennzeichnet, dass** die Laufräder (10) mit Sicherheitsschaltern (28) versehen sind, die die Antriebseinheit (14) bei Abnahme der Laufräder (10) vom Rollstuhlgestell abschalten.

## Claims

1. Drive assistance device for a hand-driven wheel chair having a wheel chair frame, wherein said drive assistance device comprises the following features:
two running wheels (10) which can be detachably mounted to a wheel chair frame and which are provided with hand rims (12), wherein each of said running wheels comprises a wheel hub as well as a drive unit (14) having an electric motor (22) and a power supply (21) and an electronic control unit associated thereto,
wherein said drive unit (14) is completely located in the region of said wheel hub,
a stationary portion of said electric motor (22) can be stationary supported by means of a torque support (26) at said wheel chair frame of a hand-driven wheel chair and **characterized in that**
said drive unit comprising the winding of said electric motor, said power supply (21) and said electronic control unit is connected with a part of said wheel hub such that it rotates together with said running wheel (10).

2. Drive assistance device according to claim 1, **characterized in that** said drive unit (14) comprises an electronic drive unit, an adjusting means for the degree of drive assistance and an adjusting means (19) for the automatic after-running of said drive assistance device.

3. Drive assistance device according to any of claims 1 to 2, **characterized in that** said drive unit (14) comprises an electric motor (22) with or without gear transmission.

4. Drive assistance device according to any of claims 1 to 3, **characterized in that** said hand rim (12) is mounted to said running wheel (10) on struts (15, 16, 17, 18) being evenly arranged over the circumference of said hand rim and being mounted radially outward of the region of said wheel hub.

5. Drive assistance device according to claim 4, **characterized in that** said struts (15, 16, 17, 18) are mounted in an elastic and resilient manner.

6. Drive assistance device according to claim 4 or 5, **characterized in that** in the area of at least one of the struts (15, 16, 17, 18) a load or force sensor (32) is located which measures the force induced into the hand rim (12) and which transmits a corresponding measurement signal directly to the electronic control unit.

7. Drive assistance device according to any of claims 1 to 6, **characterized in that** said running wheels (10) can be mounted at the wheel chair frame by means of a quick release plug-in axle (23).

8. Drive assistance device according to any of claims 1 to 7, **characterized in that** said running wheels (10) are formed identically.

9. Drive assistance device according to any of claims 1 to 8, **characterized in that** said running wheels (10) are provided with safety switches (28) which are adapted to switch off said drive unit (14) when said running wheels (10) are detached from said wheel chair frame.

## Revendications

1. Dispositif de propulsion auxiliaire pour un fauteuil roulant propulsé par le patient comportant un châssis de fauteuil roulant, le dispositif de propulsion auxiliaire présentant les attributs suivants :
deux roues de roulement (10) pouvant être fixées de façon amovible sur un châssis de fauteuil roulant et munies de bagues de préhension (12) qui comportent respectivement un moyeu de roue ainsi qu'une unité de propulsion (14) avec un moteur électrique (22) et une alimentation en courant (21), ainsi qu'un système électronique correspondant,
les unités de propulsion (14) étant disposées entièrement dans la région des moyeux de roues,
une partie stationnaire du moteur électrique (22) pouvant s'appuyer de façon stationnaire sur le châssis de fauteuil roulant d'un fauteuil roulant propulsé par le patient à l'aide d'une appui de couple de rotation (26), **caractérisé en ce que**
l'unité de propulsion avec l'enroulement du moteur électrique, l'alimentation en courant (21) et le système électronique est reliée avec une partie du moyeu de roue de façon à tourner solidairement avec la roue de roulement (10).

2. Dispositif de propulsion auxiliaire selon la revendication 1, **caractérisé en ce que** l'unité de propulsion (14) comporte un système électronique d'amorçage, une possibilité de réglage du degré d'assistance et une possibilité de réglage (19) de la poursuite automatique du dispositif de propulsion auxiliaire.

3. Dispositif de propulsion auxiliaire selon l'une quelconque des revendications 1 ou 2, **caractérisé en ce que** l'unité de propulsion (14) comporte un moteur électrique (22) avec ou sans multiplicateur de vitesse.

4. Dispositif de propulsion auxiliaire selon l'une quelconque des revendications 1 à 3, **caractérisé en ce que** la bague de préhension (12) est logée sur des supports (15, 16, 17, 18) répartis de façon homogène sur sa périphérie, à l'extérieur du moyeu de roue, sur la roue de roulement (10).

5. Dispositif de propulsion auxiliaire selon la revendication 4, **caractérisé en ce que** les supports (15, 16, 17, 18) sont logés de façon élastique sur ressort.

6. Dispositif de propulsion auxiliaire selon la revendication 4 ou 5, **caractérisé en ce que** dans la région d'au moins l'un des supports (15, 16, 17, 18) est disposé un capteur de pression ou de force (32) qui mesure la force introduite dans la bague de préhension (12) et qui retransmet directement un signal de mesure correspondant au système électronique.

7. Dispositif de propulsion auxiliaire selon l'une quelconque des revendications 1 à 6, **caractérisé en ce que** les roues de roulement (10) peuvent être fixées sur le châssis du fauteuil roulant par un arbre de roue à changement rapide (23).

8. Dispositif de propulsion auxiliaire selon l'une quelconque des revendications 1 à 7, **caractérisé en ce que** les roues de roulement (10) sont conçues de façon identique.

9. Dispositif de propulsion auxiliaire selon l'une quelconque des revendications 1 à 8, **caractérisé en ce que** les roues de roulement (10) sont munies de commutateurs de sécurité (28) qui coupent l'unité de propulsion (14) lorsqu'on retire les roues de roulement (10) du châssis du fauteuil roulant.
